(19) **Europäisches Patentamt**
**European Patent Office**
**Office européen des brevets**

(11) Numéro de publication : **0 321 378 B1**

(12) **FASCICULE DE BREVET EUROPEEN**

(45) Date de publication du fascicule du brevet :
**29.07.92 Bulletin 92/31**

(51) Int. Cl.⁵ : **B65G 47/14**

(21) Numéro de dépôt : **88500125.5**

(22) Date de dépôt : **16.12.88**

(54) **Dispositif automatique de redressement et d'alignement de récipients.**

(30) Priorité : **18.12.87 FR 8718194**

(43) Date de publication de la demande :
**21.06.89 Bulletin 89/25**

(45) Mention de la délivrance du brevet :
**29.07.92 Bulletin 92/31**

(84) Etats contractants désignés :
**AT BE CH DE GB GR IT LI LU NL SE**

(56) Documents cités :
**AU-B- 499 038**
**FR-A- 2 543 926**
**US-A- 3 295 659**

(73) Titulaire : **Marti Sala, Jaime**
**Emancipacion n. 8**
**E-08017 Barcelona (ES)**

(72) Inventeur : **Marti Sala, Jaime**
**Emancipacion n. 8**
**E-08017 Barcelona (ES)**

(74) Mandataire : **Manresa Val, Manuel**
**Gerona n. 34**
**E-08010 Barcelona (ES)**

EP 0 321 378 B1

Jouve, 18, rue Saint-Denis, 75001 PARIS

## Description

La présente invention concerne un dispositif automatique de redressement et d'alignement de récipients de toutes formes et dimensions, conçu pour approvisionner en continu une installation d'embouteillage ou un équipement similaire. Parmi les dispositifs connus du genre en question nous pouvons citer:

– le brevet US-A-3 295 659 qui décrit une machine dans laquelle un disque mobile, incliné par rapport à l'horizontale, formant le fond d'un réceptacle où sont chargés au hasard les récipients, possède à sa périphérie une pluralité d'ouvertures aptes à loger un récipient avec des moyens pour retenir son goulot, le reste de son corps reposant sur un plan inférieur fixe, qui, à la partie la plus haute du fond du réceptacle, présente une ouverture par laquelle le récipient tombe par gravité, après avoir basculé, vers une goulotte de sortie, que le maintien en position verticale;

– les brevets US-A-3 650 368 et AU-B- 499 038 qui décrivent des machines similaires dans lesquelles on a ajouté au dessous du réceptacle d'accumulation de récipients, combiné avec son ouverture d'évacuation, une pluralité de goulottes, formant un tambour tournant, vers lesquelles tombent séquentiellement, en position verticale, les récipients, qui sont enfin détournés vers un transporteur d'évacuation. Toutes ces machines font toujours intervenir un réceptacle circulaire, dans lequel un élément circulaire, tel un disque ou une structure annulaire, ramasse, au moyen de cavités situées sur la périphérie du réceptacle, dans une zone de chargement délimitée par l'inclinaison du plan de fond ou en y ajoutant un plan incliné, un profil tronconique, etc, les récipients pour les transporter, en retenant leur goulot ou une autre partie de leur corps sur la partie mobile, et le reste de leur corps sur un plan fixe, qui, lorsqu'il est interrompu, permet le tranfert des récipiens, par gravité, vers des goulottes les maintenant en position verticale.

De tels dispositifs présentent toutefois les inconvénients suivants:

– l'acroissement des performances par l'accroissement du diamètre du dispositif, impose pour son transport des engins spéciaux et des conditions d'un coût élevé;

– l'accroissement des performances par l'accroissement de la vitesse du dispositif, introduit une force centrifuge pouvant affecter défavorablement les conditions d'évacuation des récipients et les endommager.

La présente invention a notamment pour but de remédier à ces divers inconvénients et concerne à cet effet un dispositif automatique de redressement et d'alignement de récipients de toutes formes et dimensions, conçu pour approvisionner, en continu, une installation d'embouteillage ou un équipement similaire, caractérisé en ce qu'il comportant:

a) un réceptacle présentant des parois extérieures d'une part courbées d'autre part rectilignes, ou légèrement incurvées, dans les zones:

– de chargement des récipients dans les cavités de positionnement et d'entraînement de ces derniers,

– d'évacuation desdits récipients dans une ouverture pratiquée dans un plan fixe supportant le corps de ces derniers lors de leur déplacement;

b) une série de chariots, porteurs des pièces dotées de cavités destinées à loger et à entraîner les récipients de la zone de chargement à la zone d'évacuation et situées dans la zone comprise entre la périphérie du plan de fond fixe du réceptacle et sa paroi latérale, dotés de moyens de roulements ou de glissements située au dessous du plan de fond fixe et se déplaçant le long d'un chemin fermé présentant des parties rectilignes au niveau des zones rectilignes du réceptacle, les dits chariots étant reliés entre-eux et entraînés par des moyens de liaison et d'entraînement flexibles ou articulés;

c) l'élément plan, fixe, situé au dessous des pièces d'entraînement des récipients, destiné à supporter ces derniers lorqu'ils sont entraînés par lesdites pièces tout au long de leurs parcours jusqu'à l'ouverture d'évacuation et qui a la particularité d'être réglable en hauteur par rapport au plan de déplacement desdites pièces, en fonction du calibre des récipients;

d) une bande transporteuse, dotée d'appendices, située dans la zone basse du plan incliné et tournant dans le sens inverse du déplacement des chariots porteurs desdites pièces.

Les avantages obtenus grâce à l'invention permettent de réaliser des machines:

- de grandes dimensions : longueur indifférente et largeur fonction des moyens de transport;

- aux performances élevées : vitesse indifférente, les zones de chargement et d'évacuation étant rectilignes ou légèrement incurvées.

D'autres caractéristiques et avantages apparaîtront à la lecture de la description détaillée qui suit d'un mode de réalisation préférentiel de l'invention, donné à titre d' exemple non limitatif et représenté aux dessins annexés. Sur ces dessins:

– la figure 1, correspond à une vue en plan partiellement coupée, de la machine, avec un détail du réceptacle pour l'accumulation des récipients, des cavités mobiles pour le ramassage desdits récipients et du transporteur de sortie;

– la figure 2, correspond à une vue en élévation, relative à une coupe par un plan vertical, de la machine illustrée à la figure 1;

– la figure 3, montre un détail en élévation d'un des chariots qui porte les pièces formant des cavités pour ramasser les récipients et les conduits ou goulottes pour les évacuer vers l'extérieur en position verticale;

– la figure 4, correspond à une vue en élévation d'un desdits chariots associé à des glissières guides;

– la figure 5 montre, en perspective, une vue de la machine décrivant son fonctionnement.

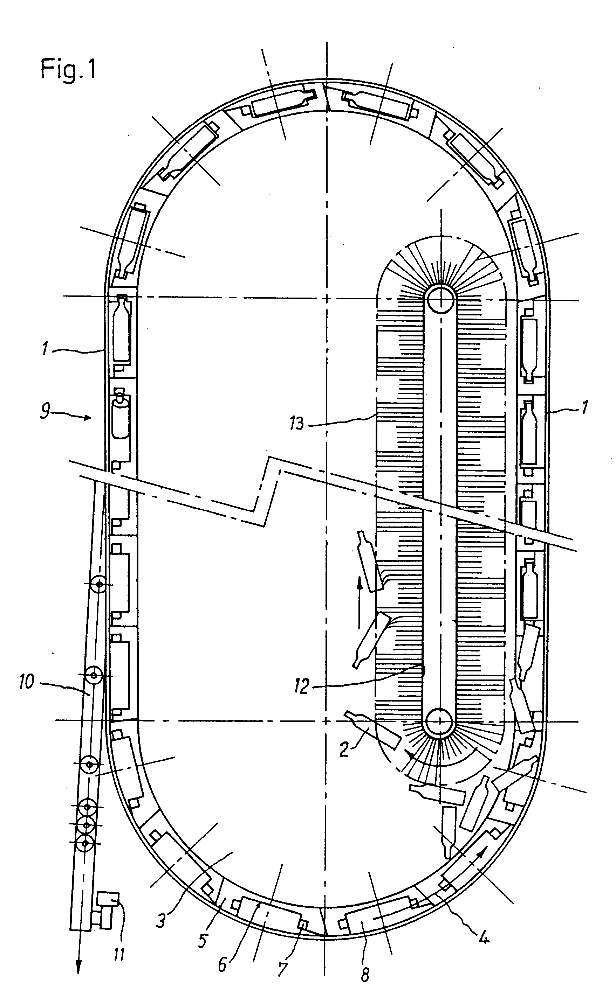

Selon la figure 1, le dispositif préconisé comporte un réceptacle 1 fixe, possédant deux grandes parois opposées rectilignes et deux petites parois oposées demi-cylindriques, ouvert partiellement ou totalement dans sa partie supérieure pour l'introduction en vrac des récipients 2 qui s'accumulent sur un plan de fond 3 fixe, dont la périphérie reste à une certaine distance de la paroi latérale dudit réceptacle 1, de sorte qu'au dessous de la zone comprise entre le bord de ce plan 3 et ladite paroi latérale, des pièces 5, qui se déplacement dans le sens de la flèche 4, forment des grandes cavités 6 aptes à loger le corps des récipients 2 et des petites cavités 7, opposées, aptes à loger et à soutenir le goulot desdits récipients ou toute extremité de dimension réduite, et ce quelle que soit la position d'accès à ladite cavité.

Ainsi, les récipients sont logés dans les cavités 6 et la portion principale de leur corps reste supportée par un plan fixe 8 inférieur, tandis que le goulot reste soutenu par les logements 7. La zone 9 de déchargement ou de transport des récipients 2, correspond à une ouverture du plan 8 conformément au principe de fonctionnement décrit en détail dans le brevet N° 3 295 659.

Fonctionnellement associé à la machine, un transporteur 10, rectiligne, orienté obliquement par rapport à un des côtés rectilignes du réceptacle 1, véhicule les récipients 2 en position verticale stable. Ledit transporteur, bien qu'il soit représenté comme une bande sans fin, convenablement actionnée par un moteur 11, peut adopter toute autre présentation, l'important étant la réception des récipients en position verticale et leur transport de manière stable. Le plan fixe 3, de fond du réceptacle, est incliné par rapport à l'horizontale, pour définir ainsi une zone d'accumulation préférentielle des récipients 2, de sorte qu'ils aient un libre accès vers les cavités 6 de ramassage.

Dans ladite zone, une bande transporteuse 12, dotée d'appendices 13, va donner aux récipients 2 une vitesse relative par rapport aux cavités 6 mobiles, beaucoup plus grandes afin de faciliter le positionnement desdits récipients dans ces logements; lesdits moyens 12 et 13 servent également à renvoyer vers la zone de chargement les récipients incorrectement positionnés sur les cavités 6 pour être expulsés vers l'intérieur du réceptacle 1 à l'aide de moyens détecteurs et éjecteurs, d'un type connu, installés sur le trajet des cavités 6.

Selon une variante de l'invention le plan fixe 8 peut-être réglé en hauteur par rapport aux pièces 5 pour tenir compte de variations importantes dans les dimensions des corps de récipients. Le moyen de réglage, par exemple du type trou ovalisé-boulon-écrou, n'a pas été représnté pour des raisons de commodité.

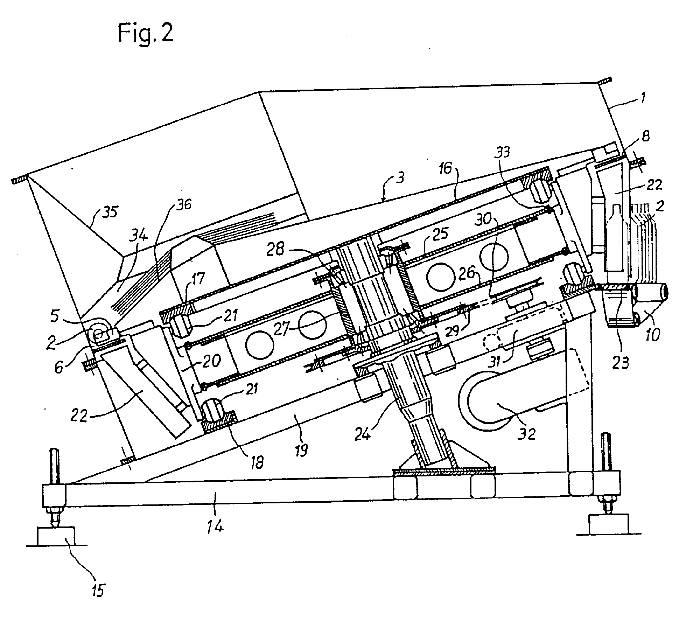

Selon la figure 2, le réceptacle fixe 1 est relié à un banc porteur 14 soutenu par des pieds 15 à hauteur réglable. Au dessous du plan de fond 3, fixe, incliné par rapport à l'horizontale, apparaît un deuxième plan 16, également fixe et incliné, sur la face inférieure duquel sont ancrées des glissières 17, combinées avec un deuxième jeu de glissières 18 opposées, situées sur une structure inférieure 19, formée par des traverses reliées au banc 14, déterminant des moyens de guidage, pour un ensemble de châssis 20, terminés à leurs parties supérieures et inférieures par des roues 21, constituant des chariots porteurs des pièces 5, comportant les cavités 6, qui restent situés au dessous de la zone comprise entre la périphérie du plan 3 et la paroi latérale du réceptacle 1. Ces chariots portent également, convenablement orientés par rapport auxdites pièces 5, des conduits ou goulottes 22 servant au transport des récipients 2, en position verticale, vers une plate-forme 23, sur laquelle ils se déplacent entraînés par lesdites goulottes 22.

Un transporteur horizontal 10, représenté sous la forme d'une bande sans fin, sur le même plan que ladite plate-forme 23, évacue les récipients à l'extérieur de l'ensemble. A chacune des extrémités du dispositif, au dessous du réceptacle 1, apparaît un arbre 24, incliné par rapport à la verticale, solidaire du banc 14, qui supporte une structure tournante, formée par deux disques à profil denté 25 et 26, solidaire d'une chemise cylindrique 27, montée en rotation sur des roulements 28, sur ledit arbre, cette chemise étant solidaire d'un pignon coaxial 29, qui s'enclenche à un deuxième pignon 30, solidaire d'un systeme réducteur 31, relié à un moteur 32, monté sur le banc 14. Sur les disques dentés 25 et 26, sont montés les chaînes 33 qui relient entre eux les divers chariots 20.

On observe également sur cette figure, que dans la zone de chargement, à un niveau plus bas que le réceptacle 1, est défini un passage étroit 34, entre les deux profils inclinés 35 (liés à la paroi du réceptacle 1) et 36, ce dernier correspondant au plan 3, de sorte que les récipients 2, sont préalablement orientés et ne peuvent avoir accès aux cavités 6 que s'ils sont couchés.

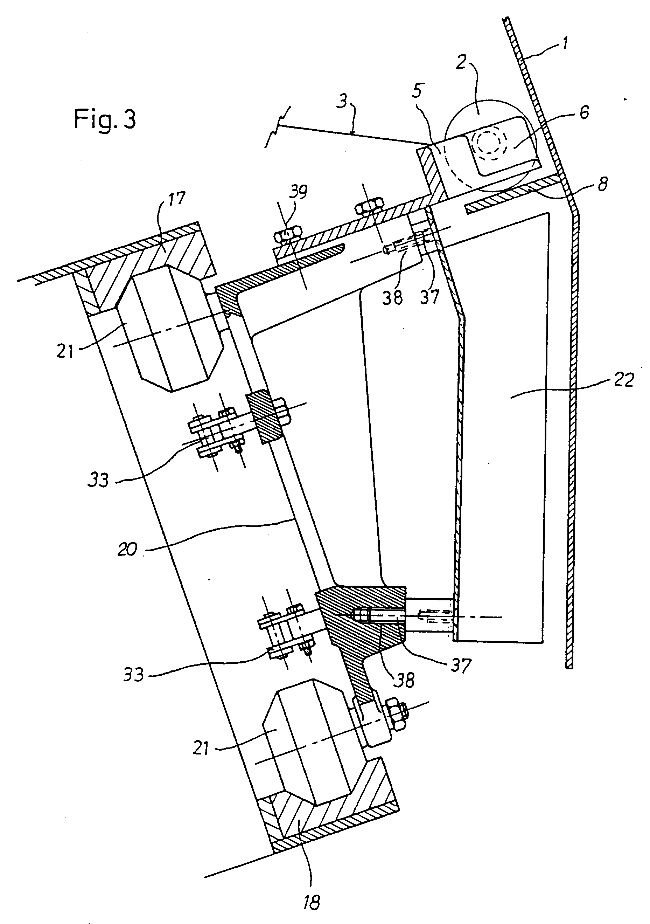

Selon la figure 3, les pièces support 5, possédant des cavités 6 et des goulottes 22, sont fixées aux châssis 20, porteurs des roues 21, qui sont guidées par les glissières fixes 17 et 18 dont les châssis 20, entraînés par les chaînes 33, décrivent un chemin fermé au dessous de la périphérie du plan 3. La liaison amovible entre lesdits ensembles est avantageusement réalisée sous la forme d'un raccordement rapide mâle-femelle 37-38 et au moyen de vis 39.

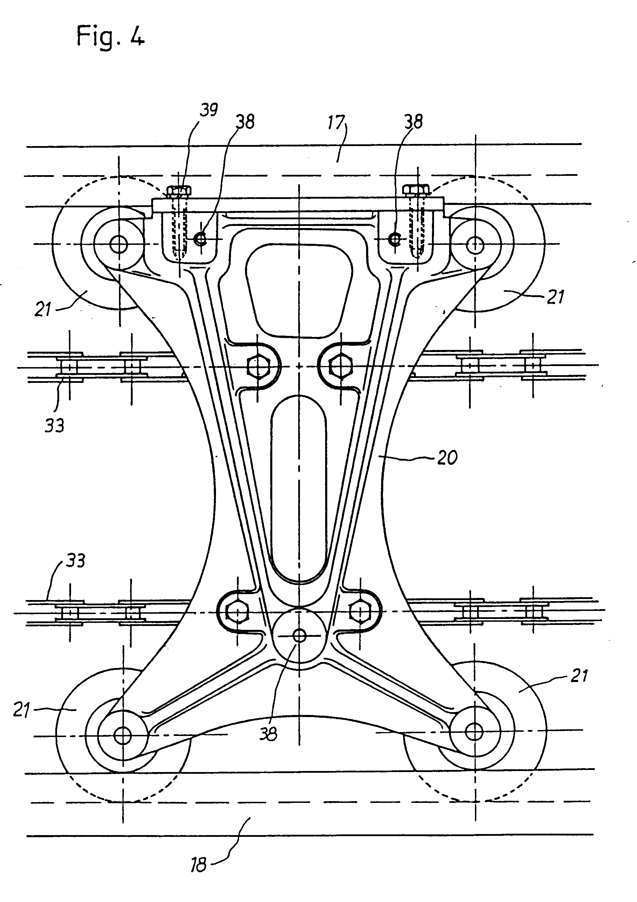

Selon la figure 4, le châssis 20 réalisé par quatre bras formant un X et soutenant les roues 21 destinées à être guidées par les glissières 17 et 18. Sur cette même figure apparaissent les moyens d'ancrage 38 et 39 des pièces 22 et 5 ainsi que les chaînes 33 qui entraînent les châssis 20 conformément à ce qui a déjà été exposé.

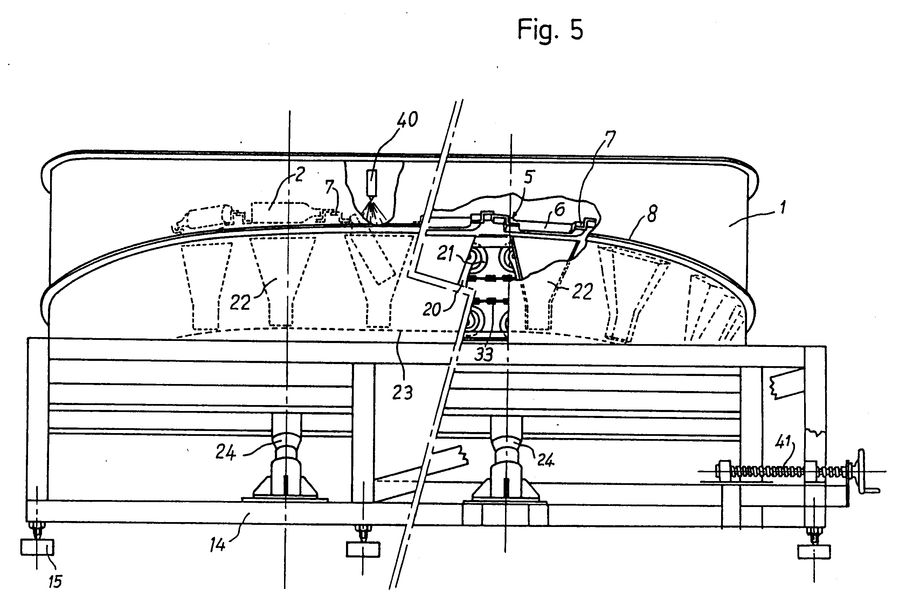

Selon la figure 5, le dispositif est représenté pour permettre notamment de comprendre ses caractéristiques de fonctionnement. Sont représentés, le réceptacle 1 ainsi que le plan 8 qui définit un parcours fermé, incliné, au dessous du plan de fond fixe 3, le long de sa périphérie, sur lequel la portion principale des récipients 2, logés dans les cavités 6, vient s'appuyer, alors que le goulot est logé dans la zone 7.

Lorsque le plan 8 est interrompu et les récipients retenus par leurs goulots, on les oblige à basculer uniformément, par exemple avec leur fond vers le bas, de manière à tomber verticalement dans les conduits ou goulottes 22 pour reposer sur la plate-forme 23 à partir de laquelle ils sont déviés, par des moyens de guidage, vers le transporteur 10. En option, au dessus de la zone prévue pour la chute des récipients 2, une buse 40, montée sur le paroi du réceptacle 1, fournit un courant d'air sous pression qui facilite le transport des récipients 2 depuis les cavités 6 jusqu'aux conduits 22.

On peut également apercevoir, sur cette figure, les deux arbres fixes 24 inclinés, situés aux deux extremités de la machine et solidaires du banc 14 soutenu par les pieds 15. On a également représenté, au moyen d'une zone découpée, la disposition adoptée pour les châssis 20, avec leurs roues 21, par rapport aux pièces 5, 22 et 33. Un dispositif tendeur 41 est également prévu pour la tension des chaînes d'entraînement 33.

Bien entendu, l'invention n'est pas limitée au mode de réalisation décrit et représenté, pour lequel on pourra prévoir d'autres variantes et l'étendre à d'autres applications sans pour cela sortir du cadre de l'invention défini par les revendications. En particulier les parties rectilignes du dispositif, pourront être légèrement incurvées dans la limite d'une force centrifuge ne provoquant aucune gêne au chargement et à l'évacuation des récipients 2.

**Revendications**

1. Dispositif automatique de redressement et d'alignement de récipients, conçu pour approvisionner, en continu, une installation d'embouteillage ou un équipement similaire, comportant:

a) un réceptacle (1) présentant des parois extérieures d'une part courbées, d'autre part rectilignes, ou légèrement incurvées, dans la zone de chargement des récipients (2) sur des pièces support (5) de positionnement et d'entraînement de ces derniers, et dans la zone d'évacuation desdits récipients par une ouverture (9) pratiquée dans un plan fixe (8) supportant les corps de ces dernières lors de leur déplacement;

b) une série de chariots (20), porteurs des pièces support (5), comportant chacune une cavité dans laquelle se loge un récipient individuel (2) avec retenue d'une partie de son corps pendant le mouvement dudit chariot, destinée à véhiculer lesdits récipients de la zone de chargement à la zone d'évacuation et située dans la zone comprise entre la périphérie du plan de fond fixe (3) du réceptacle (1) et sa paroi latérale, dotés de moyens (21) de roulement, ou de glissement, situés au dessous dudit plan de fond et se déplaçant le long d'un chemin fermé (17-18) présentant des parties rectilignes, ou légèrement incurvées, en correspondance avec les zones similaires du réceptacle (1), lesdits chariots étant reliés entre-eux et entraînés par des moyens flexibles ou articulés (33); et une série de goulottes de chute (22) fixées auxdits chariots de manière amovible au moyen d'une liaison (37-39), permettant leur remplacement rapide, lesdites goulottes étant placés à la verticale des cavités desdites pièces (5) et ayant une forme permettant la réception et l'orientation des récipients que l'on récupère dans une position bien déterminée;

c) l'élément plan fixe (8), situé en dessous des pièces (5) d'entraînement des récipients (2), destiné à supporter la portion des récipients qui n'est pas retenue par lesdites pièces support lors de leur entraînement tout au long de leur parcours, ledit plan étant disposé entre les cavités desdites pièces support et les goulottes de chute et possédant une ouverture au travers de laquelle tombent les récipients;

d) un moyen (12), situé dans la zone de chargement des récipients (2) sur les pièces support (5), se déplaçant à la périphérie du plan de fond (3) du réceptacle (1) en mettant en mouvement les récipients (2).

2. Dispositif, selon la revendication 1, caractérisé en ce que l'élément plan (8) comporte des moyens permettant de régler sa hauteur, par rapport aux pièces support (5), en fonction du calibre des récipients utilisés.

3. Dipositif, selon la revendication 1, caractérisé en ce que le chemin fermé, sur lequel se déplacent les chariots (20) par l'intermédiaire de moyens de roulement (21), comporte deux glissières opposées (17) et (18), fixées sur le châssis de la machine.

4. Dispositif, selon la revendication 1, caractérisé en ce que les moyens de liaison et d'entraînement flexibles ou articulés (33), sont formés par des cables, ou des courroies associés à des poulies de guidage et d'entraînement, et solidaires des chariots mobiles (20).

5. Dispositif, selon la revendication 1, caractérisé en ce que le moyen (12) est une bande transporteuse, dotée d'appendices (13), tournant dans le sens inverse du déplacement des chariots mobiles (20).

6. Dispositif, selon la revendication 1, caractérisé en ce qu'un transporteur (10), adjacent aux goulottes (22) d'évacuation par gravité des récipients (2), véhicule, en oblique, ces derniers, en position verticale stable.

7. Dispositif, selon la revendication 1, caractérisé en ce que la zone d'accumulation des récipients comporte des parois (35) et (36) à l'intérieur desquelles les récipients (2) ne peuvent passer qu'en position couchée.

8. Dispositif, selon la revendication 1, caractérisé en ce que le dispositif flexible pour la transmission de mouvement auxdits chariots est constitué de chaînes (33) convenablement guidées et reliées à des roues dentées (25) et (26), associées à des éléments rotatifs (27) montés sur l'arbre (24).

9. Dispositif, selon la revendication 1, caractérisé en ce qu'il dispose de moyens fournissant un courant d'air sous pression contribuant au déplacement, depuis les cavités de ramassage des récipients, jusqu'aux conduits d'évacuation cités.

**Patentansprüche**

1. Automatische Anlage zum Aufrichten und in einer Reihe Aufstellen von Behältern, entworfen zum kontinuierlichen Versorgen einer Abfüllanlage oder einer ähnlichen Ausrüstung, beinhaltend:

a) ein Gehäuse (1) mit äußeren Wänden, einerseits gebogen und andererseits geradlinig oder leicht gebogen in der Beladezone der Behälter (2) auf tragende Teile (5) zum Ausrichten und Antreiben letzterer, und in der Zone der Freigabe besagter Behälter durch eine Öffnung (9), eingebracht in eine feste Fläche (8), welche die Körper der Behälter während deren Bewegung trägt;

b) eine Anzahl Schlitten (20) als Träger der Trageteile (5), jeder vorsehend eine Aufnahme in welcher ein einzelner Behälter (2) untergebracht ist, mit Zurückhaltung eines Teils seines Körpers während der Bewegung des besagten Schlittens, bestimmt zum Befördern der besagten Behälter von der Belade- zur Freigabezone und gelegen in dem Bereich zwischen dem Umfang der feststehenden Fläche (3) des Gehäuses (1) und seiner Seitenwand, ausgestattet mit Mitteln (21) zum Rollen oder Gleiten, gelegen unterhalb besagter Bodenfläche und sich bewegend längs eines geschlossenen Weges (17-18), bestehend aus geradlinigen und leicht gebogenen Abschnitten und in Abstimmung mit den ähnlichen Abschnitten des Gehäuses (1), die besagten Schlitten miteinander verbunden und angetrieben mit flexiblen oder gelenkigen Hilfsmitteln (33); und eine Anzahl Rutschschächte (22) befestigt an besagten Schlitten, leicht abnehmbar durch eine Verbindung (3739), erlaubend ihren schnellen Wechsel, besagte Schächte sind vertikal angebracht zu den Aufnahmen besagter Teile (5) und haben eine Form, welche das Aufnehmen und Ausrichten der Behälter erlaubt, so daß sie in einer genau festgelegten Stellung gehalten werden;

c) die feste Fläche (8), gelegen unterhalb der tragenden Teile (5) für den Teil der Behälter (29), der nicht von den besagten Trageteilen (5) während des Transports auf der Länge des Weges gehalten wird ertragen, diese Fläche ist vorgesehen zwischen den Aufnahmen besagter Trageteilen (5) und den Rutschschächten (22), und besitzend eine Öffnung durch welche die Behälter fallen;

d) ein Mittel (12), gelegen in der Beladezone der Behälter (2) über den Trageteilen (5), sich bewegend am Umfang der Bodenfläche (3) des Gehäuses (1), um die Behälter (2) in Bewegung zu versetzen.

2. Automatische Anlage gemäß Anspruch 1, dadurch gekennzeichnet, daß die Fläche (8) Mittel besitzt, die erlauben ihre Höhe zu verstellen, im Vergleich zu den Trageteilen (5) entsprechend des Querschnitts der verwendeten Behälter (2).

3. Automatische Anlage gemäß Anspruch 1, dadurch gekennzeichnet, daß der geschlossene Weg, auf dem sich die Schlitten (20) innerhalb von Rollen (21) bewegen, zwei gegenüberliegende Gleitführungen (17) und (18) besitzt, befestigt am Gehäuse der Maschine.

4. Automatische Anlagen gemäß Anspruch 1, dadurch gekennzeichnet daß, die flexiblen oder gelenkigen Verbindungs und Antriebsmittel (33) Seile oder Gurte sind, welche mit Führungs oder Antriebsrollen vereint sind und formschlüssig verbunden mit den beweglichen Schlitten (20).

5. Automatische Anlagen gemäß Anspruch 1, dadurch gekennzeichnet, daß das Mittel (12) ein Transportband mit Einlagen ist, drehend im entgegengesetzten Sinn zur Bewegung der mobilen Schlitten (20).

6. Automatische Anlagen gemäß Anspruch 1, dadurch gekennzeichnet, daß ein Transporteur (10), angrenzend an die Schächte (22) zur Freigabe der Behälter (2) durch Schwerkraft, diese Behälter in standfeste Lage und srägt zur Freigabezone befördert.

7. Automatische Anlagen gemäß Anspruch 1, dadurch gekennzeichnet, daß die Sammelzone der Behälter Wände (35) und (36) besitzt, zwischen denen die Behälter (2) nur in liegender Lage passieren können.

8. Automatische Anlagen gemäß Anspruch 1, dadurch gekennzeichnet, daß die flexible Vorrichtung zum übertragen der Bewegung auf besagte Schlitten Ketten (33) sind, die in geeigneter Weise geführt und verbunden mit Zahnrädern (25) und (26), verbunden mit drehenden Elementen (27) befestigt auf der Welle (24).

9. Automatische Anlagen gemäß Anspruch 1, dadurch gekennzeichnet, daß sie Mittel vorsieht, die einen Druckluftstrahl liefern, welcher beiträgt zur Bewegung der Behälter von den aufnahmen der Trageteile (5) bis zu den besagten Schächten.

## Claims

1. Automatic device for raising and aligning containers, conceived for continuously feeding a bottle line or similar equipment, comprising:

a) a hopper having a side wall with a rectilinear portion and a curvilinear or slightly curvilinear portion in the container's loading area (2) on some container holders (5) for positioning and conveying said containers, and in the container's discharging section through a port (9) in a fixed bottom (8) which supports said containers during their displacement;

b) a plurality of transport carriages (20) bearing said container holders, each of said container holders having a cavity to receive a single container (2) engaging one part of each container during the movement of the carriage, for conveying said container from the loading area to the discharging area, said transport carriages being placed in the zone comprised between the periphery of the fixed bottom plane (3) of the hopper (1) and its side wall, including run in or sliding means (21) extending below said bottom plane (3) and being displaceable along a closed path (17-18) having straight and curvilinear portions in correspondence with similar zones of the hopper (1), said carriages. being interconnected and drawn by flexible or articulated means (33), and one plurality of falling chutes (22) removably fixed to said carriages by connecting parts (37-39), allowing their quick replacement, said falling chutes being located vertically aligned with the cavities of said container holders (5) and having a shape for receiving and orientating containers in a predetermined position;

c) the planar fixed bottom (8) placed under container holders (5) conveying the containers (2), for supporting the portion of said containers which are not retained by said container holders (5) during their displacement along said path, is situated between the cavities of said container holders and said falling chutes and having a port trough which the containers fall;

d) a means (12) placed in the loading area of the containers on the container holders (5), movable adjacent to the periphery of the hopper's bottom plane (3) for removing the containers;

2. Device according with claim 1, characterized in that said planar member (8) includes means allowing to adjust its level with regard to the container holders (5) depending on the size of the containers used.

3. Device according with claim 1, characterized in that the closed path along with the transport carriages are run by means of rollers comprises two opposed sliders integral with the machine frame.

4. Device according to claim 1, characterized in that the flexible or articulated driving and connecting means consists of a cable or a belt associated with guiding and driving pulleys and connected to said transport movable transport carriages (20).

5. Device according to claim 1 characterized in that the means (12) is a conveyor with appendages turning in an opposite direction with regard to the displacement of said transport carriages.

6. Device according to claim 1, characterized in that a conveyor adjacent to the falling chutes, obliquely carries away said containers in a stable upright position.

7. Device according to claim 1, characterized in that the loading area in which the containers are gathered comprises walls (35), (36) through which the containers only in a lying position can pass.

8. Device, according to claim 1, characterized in that said driving flexible means to drive said transport carriages comprises chains (33) suitably guided and associated with sprockets (25) and (26) operatively connected to rotatable elements (27) mounted on the shaft (24).

9. Device according to claim 1, characterized in that it comprises means for directing an air stream to urge the containers to pass from the cavities of the container holders toward the chutes.

Fig.1

Fig. 2

Fig. 3

Fig. 4

Fig. 5